# FASCICULE DE BREVET EUROPEEN

(11) **EP 2 122 644 B1**
(45) Date de publication et mention de la délivrance du brevet: **05.08.2015**
(21) Numéro de dépôt: 08761835.1
(22) Date de dépôt: 05.02.2008
(51) Int. Cl.: H01H 3/12, H01H 13/16

(54) **DISPOSITIF DE DÉTECTION ET SIEGE COMPORTANT UN TEL DISPOSITIF**
DETEKTIONSVORRICHTUNG UND SITZ DAMIT
DETECTION DEVICE AND SEAT INCLUDING SUCH DEVICE

(30) Priorité: 13.03.2007 FR 0701804
(43) Date de publication de la demande: 25.11.2009
(73) Titulaire: Crouzet Automatismes, 26000 Valence (FR)
(72) Inventeur: NIGUET, Ludovic, F-38050 Grenoble Cedex 9 (FR); COLLOT, Stéphane, F-26120 Chateaudouble (FR); ROUX, Christian, F-26120 Montmeyran (FR)
(74) Mandataire: GIE Innovation Competence Group
(86) Numéro de dépôt international: PCT/FR2008/000131
(87) Numéro de publication internationale: WO 2008/113902

(56) Documents cités:
- DE-A1- 3 405 652
- DE-U- 6 603 334
- US-A- 3 921 750

## Description

### DOMAINE TECHNIQUE DE L'INVENTION

L'invention est relative à un dispositif de détection comportant un corps comportant un contact électrique à au moins deux états électriques de fonctionnement. Le dispositif de détection comporte un organe de commande mobile ayant au moins deux positions de fonctionnement et étant relié au corps par une liaison glissière autorisant le déplacement en translation de l'organe de commande mobile par rapport au corps et par au moins une liaison pivot autorisant le pivotement de l'organe de commande par rapport au corps autour d'au moins un appui. Le changement de position de l'organe de commande mobile étant destiné à actionner le dispositif de contact électrique.

L'invention est aussi relative à un siège comprenant au moins une surface d'assise déformable sur laquelle est destiné à venir s'asseoir un passager. Le siège comprend un bâti rigide destiné à être fixé à un véhicule et comprenant moins un dispositif de détection placé dans le siège de manière à détecter les déformations dudit siège.

### ETAT DE LA TECHNIQUE

De nombreuses solutions permettent de détecter la présence d'objets ou de corps sur un support. Il existe notamment des dispositifs de détection électromécaniques adaptés à la détection de personnes ou d'objet sur des sièges, plus particulièrement sur des sièges de véhicules automobiles.

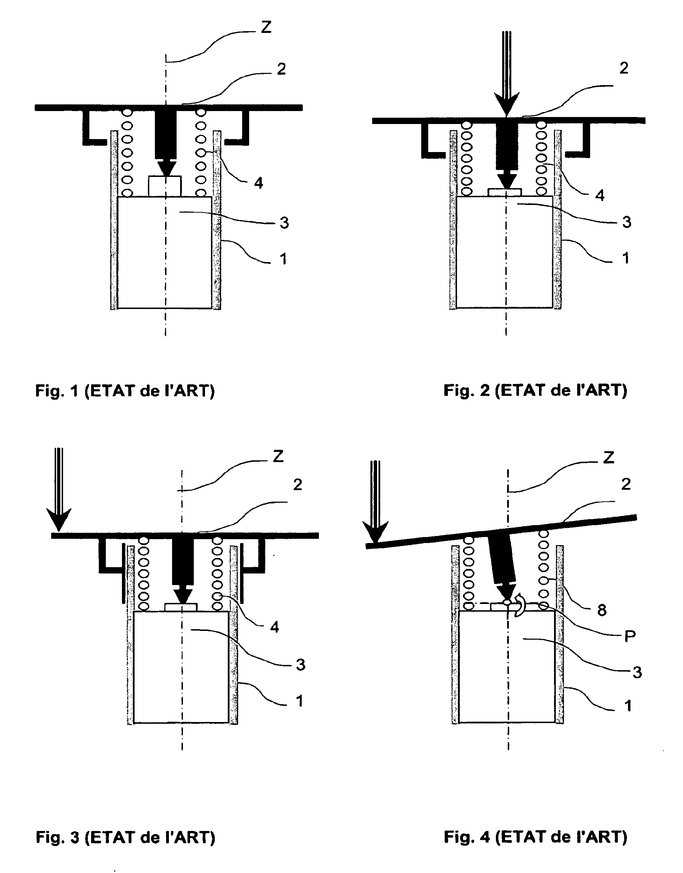

Comme représenté sur les figures 1 à 4, les dispositifs de détection de l'état de l'art comportent essentiellement un contact électrique 3 placé entre deux éléments 1 , 2 dont l'un au moins est mobile par rapport à l'autre. Le premier élément 1 est composée d'un corps tel qu'un boîtier. Le second élément 2 est composé d'un organe de commande tel qu'un bouton poussoir. Le contact électrique 3 est placé généralement à l'intérieur du boîtier. Le contact électrique 3 comporte au moins deux états électriques, ouvert ou fermé. Chaque état électrique dudit contact correspond à une des positions de fonctionnement des premier et second éléments 2, 3 et donc à un état de détection actif ou inactif du dispositif de détection. Le déplacement du bouton poussoir à l'intérieur du boîtier entraîne généralement, après une course de déplacement, un changement d'état électrique du contact 3. Des moyens d'actionnement intermédiaires peuvent être utilisés pour transmettre le mouvement du bouton poussoir au contact électrique 3.

Dans le cas de la détection d'un passager sur un siège de véhicule, le dispositif de détection peut être positionné sous la surface d'assise du siège du véhicule. Dès que le passager prend place sur le siège, le siège se déforme et génère une force d'actionnement s'appliquent sur une surface d'actionnement du bouton poussoir. Le bouton poussoir se déplace en coulissant à l'intérieur du boîtier creux et vient commuter le contact du dispositif de détection. Le contact, généralement dans un état ouvert, passe dans un état fermé. Un signal de fermeture est alors fourni à des moyens de traitement.

Le bon fonctionnement de ce type de solution électromécanique est fortement dépendant du positionnement géométrique du point d'application de la force d'actionnement s'appliquant sur une surface d'actionnement de l'organe de commande 2.

En effet, comme représenté sur la figure 2, le dispositif de détection est particulièrement efficace lorsque la force d'actionnement FA est appliquée selon l'axe de déplacement Z de l'organe de commande.

Lorsque la force d'actionnement FA, telle représentée sur la figure 3, est décentrée par rapport à l'axe de déplacement Z du bouton poussoir, des frottements importants sont générés au niveau de la surface de guidage entre le bouton poussoir et le boîtier pouvant aller jusqu'au blocage du mécanisme. Ces frottements sont notamment dus aux problèmes d'arcs-boutements. Le niveau de détection du dispositif de détection n'est alors pas le même en fonction du point d'application de la force d'actionnement sur le bouton poussoir. Cette variation du niveau de détection pour une même force d'actionnement n'est pas tolérable pour certaines applications, notamment dans le cas de la détection de passager sur le siège de véhicule. Pour remédier aux problèmes d'arcs-boutements, des moyens de guidage efficaces peuvent être utilisés. La construction du dispositif de détection nécessite alors l'utilisation de matériau résistant et coûteux ainsi que des moyens de guidage optimisés. Ces modifications entraînent un encombrement important. La solution décrite dans le brevet EP11707P4 comporte de nombreux moyens d'actionnement intermédiaires entre l'organe d'actionnement et le contact électrique. Ce type dispositif de détection est donc plus complexe à réaliser. En outre, la taille des dispositifs de détection décrits ci-dessus est généralement importante.

De l'état de la technique est également connu de :
- US3921750A,
- DE6603334U, et
- DE3405652A1.

### EXPOSE DE L'INVENTION

L'invention vise donc à remédier aux inconvénients de l'état de la technique, de manière à proposer un dispositif de détection dont le seuil de détection ne soit pas dépendant du point d'application de la force d'actionnement.

Ledit au moins appui selon le dispositif de détection est positionné entre l'organe de commande mobile et le corps. L'organe de commande mobile est destiné à actionner le changement d'état électrique de fonctionnement du contact électrique en appuyant directement sur une surface de contact dudit contact électrique.

Selon l'invention, ledit au moins un appui de ladite au moins une liaison pivot est décentré par rapport à un axe de déplacement.

Selon l'invention, l'organe de commande mobile comporte un moyen de commande dont une extrémité est destinée à collaborer avec la surface de contact au niveau d'une zone de contact pour actionner le changement d'état électrique de fonctionnement dudit contact électrique.

Selon une mode de réalisation de l'invention, une première distance entre la zone de contact et ledit au moins un appui est supérieure à une seconde distance entre ledit au moins un appui et l'axe de déplacement. Lesdites distances et correspondent aux distances réelles projetées sur un plan perpendiculaire à l'axe de déplacement.

Selon une mode de réalisation de l'invention, une première distance entre la zone de contact et ledit au moins un appui est inférieure à une seconde distance entre ledit au moins un appui et l'axe de déplacement, lesdites distances et correspondant aux distances réelles projetées sur un plan XY perpendiculaire à l'axe de déplacement.

Selon un mode développement de l'invention, une troisième distance la zone de contact et ledit au moins un appui suivant un plan parallèle à l'axe de déplacement, est nulle.

Selon un mode développement de l'invention, une troisième distance la zone de contact et ledit au moins un appui suivant un plan parallèle à l'axe de déplacement, est supérieure à zéro.

Dans un mode de réalisation particulier, la surface de contact est perpendiculaire à l'axe de déplacement.

Dans un autre mode de réalisation particulier, la surface de contact est inclinée par rapport à l'axe de déplacement.

De préférence, la surface de contact est de forme concave.

De préférence, la surface de contact est de forme convexe.

Avantageusement, la surface de contact est de forme conique.

Avantageusement, l'organe de commande mobile est relié au corps par au moins quatre appuis autorisant respectivement chacun le pivotement dudit organe de commande mobile par rapport au corps selon une liaison pivot.

De préférence, les appuis entre l'organe de commande et le corps sont répartis uniformément sur la périphérie du corps.

Avantageusement, l'organe de commande mobile comporte une collerette en appui sur un épaulement du corps et permettant le pivotement dudit organe de commande mobile par rapport au corps.

Avantageusement, l'organe de commande mobile est maintenu dans une première position de fonctionnement par rapport au corps par un moyen de maintien, ledit moyen de maintien exerçant une force de maintien s'opposant au déplacement de l'organe de commande par rapport au corps de la première position de fonctionnement vers une seconde position de fonctionnement.

De préférence, le moyen de maintien comporte un ressort.

De préférence, le moyen de maintien exerce la force de maintien sur l'organe de commande mobile par l'intermédiaire de la surface de contact du contact électrique.

L'invention est relative à un siège comprenant au moins une surface d'assise déformable sur laquelle est destiné à venir s'asseoir un passager, un bâti rigide destiné à être fixé à un véhicule. Au moins un dispositif de détection tel que défini ci-dessus est placé dans le siège de manière à détecter les déformations dudit siège.

Avantageusement, ledit au moins un dispositif de détection est accroché sous la surface d'assise du siège par des moyens d'accrochage, la surface d'assise comprenant une surface déformable commandant le déplacement de l'organe de commande mobile par rapport au corps vers la seconde position de fonctionnement.

Avantageusement, la surface déformable est en contact avec l'organe de commande mobile.

Dans un mode de réalisation particulier, le siège comprend un dossier dans lequel est positionné un dispositif de détection pour détecter une déformation d'une première partie du dossier par rapport à une seconde partie du dossier.

### BREVE DESCRIPTION DES FIGURES

D'autres avantages et caractéristiques ressortiront plus clairement de la description qui va suivre d'un mode particulier de réalisation de l'invention, donné à titre d'exemple non limitatif, et représenté aux dessins annexés sur lesquels :
- les figures 1 à 4 représentent, des vues schématiques d'un dispositif de détection selon un mode de réalisation connu ;
- la figure 5 représente, une vue schématique d'un dispositif de détection selon un premier mode préférentiel de réalisation de l'invention ;
- les figures 6 à 7 représentent, des vues schématiques d'un dispositif de détection selon deux autres modes préférentiels de réalisation de l'invention ;

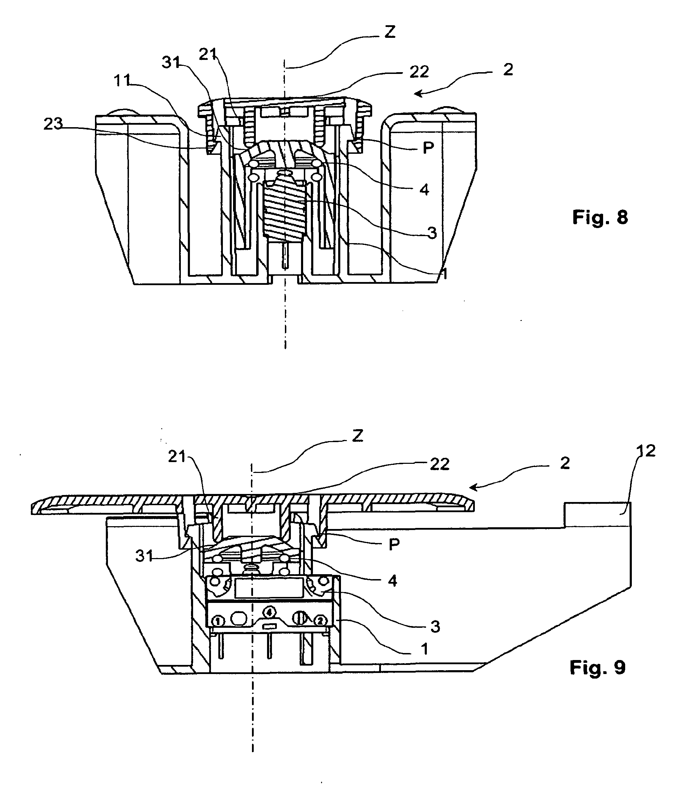

- les figures 8 à 9 représentent des variantes de réalisation d'un dispositif de détection selon les figures 5 à 7 ;
- les figures 10 et 11 représentent une variante de réalisation d'un dispositif de détection selon les figures 5 à 7 ;

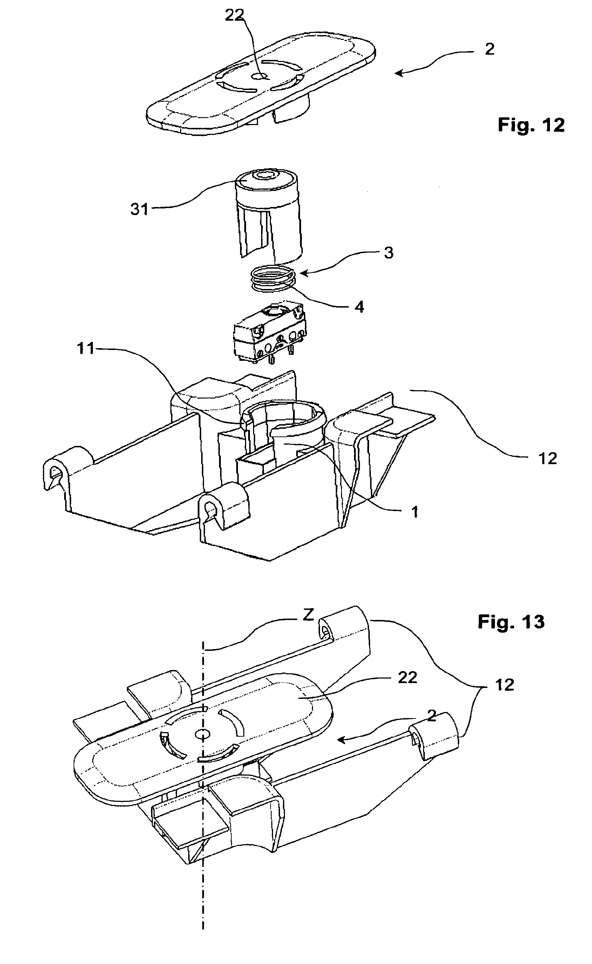

- les figures 12 et 13 représentent des vues en perspective des variantes de réalisation d'un dispositif de détection selon les figures 8 à 11.

### DESCRIPTION DETAILLEE D'UN MODE DE REALISATION

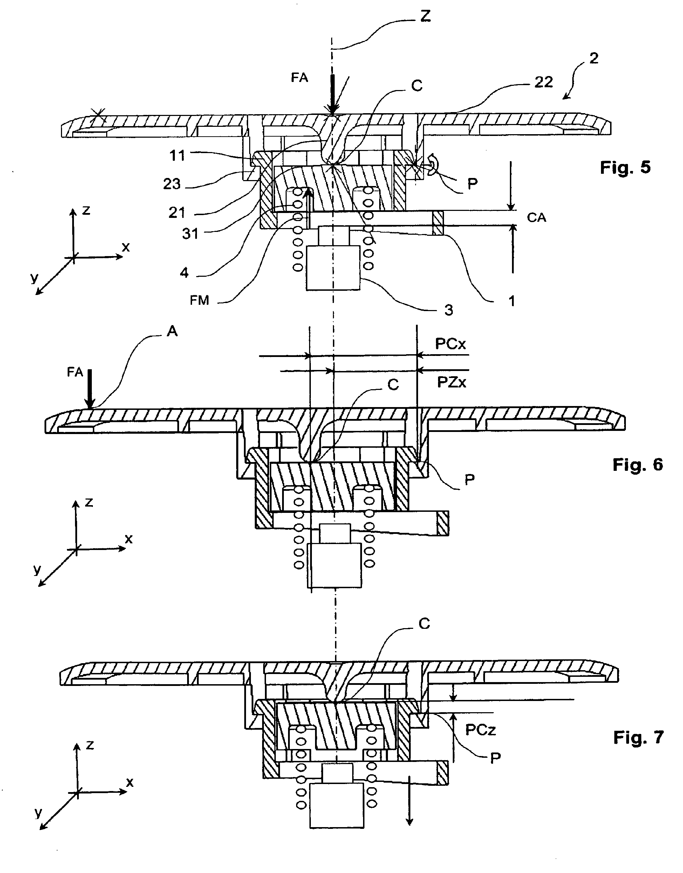

Selon un premier mode préférentiel de réalisation présenté sur la figure 5, le dispositif de détection comporte un corps 1 et un organe de commande mobile 2.

L'organe de commande mobile 2 est relié au corps par une première liaison glissière autorisant le déplacement en translation de l'organe de commande mobile 2 par rapport au corps 1 selon un axe de déplacement Z.

L'organe de commande mobile 2 est relié au corps par au moins une liaison pivot autorisant le pivotement de l'organe de commande 2 par rapport au corps 1. Chaque liaison pivot est caractérisée par un appui P entre l'organe de commande 2 et le corps 1. Selon les modes de réalisation de l'invention, l'organe de commande mobile 2 est relié au corps 1 par au moins un appui P autorisant un pivotement de l'organe de commande mobile 2 par rapport au corps 1.

Ladite au moins une liaison pivot est de préférence décentrée par rapport à l'axe de déplacement Z. Autrement dit, le ou les appuis P entre l'organe de commande mobile 2 et le corps 1 sont de préférence décentrés par rapport à l'axe de déplacement Z.

Un contact électrique 3 ayant au moins deux états électriques de fonctionnement est positionné à l'intérieur du corps 1. Le déplacement de l'organe de commande 2 entre une première et une seconde position de fonctionnement, actionne le contact électrique 3 d'un premier état électrique à un second état électrique. Le dispositif de détection passe alors d'un état de détection actif à un état de détection inactif, ou réciproquement.

On définit une course d'actionnement CA, correspondant à la course minimale nécessaire au changement d'état de détection dudit dispositif.

Selon un exemple de réalisation, le corps 1 est constitué d'un boîtier creux. Le boîtier a la forme d'un tube creux. Le tube a une section de préférence de forme cylindrique. L'axe longitudinal du corps est généralement confondu avec l'axe de déplacement Z de l'organe de commande mobile 2.

L'organe de commande mobile 2 prend la forme d'un bouton poussoir pouvant se déplacer par rapport au boîtier.

L'organe de commande mobile 2 comprend un moyen de commande 21 dont une extrémité est destinée à collaborer par l'intermédiaire d'au moins une zone de contact C avec une surface de contact 31 du contact électrique 3. Le déplacement du moyen de commande 21 est destiné à actionner ledit contact électrique. Selon les modes de réalisation représentés, ladite extrémité du moyen de commande 21 est en permanence en contact avec la surface de contact 31 du contact électrique 3. En outre, la zone de contact C est de préférence ponctuelle.

L'organe de commande mobile 2 comporte une surface de commande 22 sur laquelle vient s'appliquer la ou les forces d'actionnement FA du dispositif de détection. Selon au moins une direction, la surface de commande s'étend au-delà du corps 1.

Selon un mode de réalisation tel que représenté sur les figures 5 à 7, le moyen de commande 21 comporte une tige venant en appui sur la surface d'appui 31 du contact électrique 3. La surface de contact 31 est solidaire du contact électrique 3 au niveau de la zone de contact C.

L'organe de commande mobile 2 actionne le changement d'état électrique du contact électrique 3 en déplaçant la surface de contact 31 dudit contact électrique. La surface de contact 31 se déplace alors selon une distance égale à la course d'actionnement CA.

Selon un mode de réalisation préférentiel de l'invention, l'organe de commande mobile 2 est relié au corps 1 par au moins quatre appuis P. Chaque appui P autorise le pivotement dudit organe de commande mobile 2 par rapport au corps 1 selon une liaison pivot. Les appuis P sont répartis uniformément sur la périphérie du corps 1.

L'organe de commande mobile 2 comporte une collerette 23 en appui sur le corps 1. La collerette 23 est placée sur la périphérie de l'organe de commande mobile 2.

Afin d'augmenter le nombre d'appuis P et donc de liaisons pivot, la collerette 23 est de préférence en appui sur un épaulement 11 placé sur la périphérie du corps. Le positionnement de la collerette 23 sur l'épaulement 11 autorise alors le pivotement dudit organe de commande mobile 2 par rapport au corps 1 autour de plusieurs liaisons pivot. L'ensemble des liaisons pivot autorise un pivotement de l'organe de commande mobile selon de nombreuses directions réparties uniformément autour d'un cercle.

L'organe de commande mobile 2 est maintenu dans une première position de fonctionnement par un moyen de maintien 4. Ledit moyen de maintien 4 exerce une force de maintien FM s'opposant au déplacement de l'organe de commande 2 par rapport au corps 1 de la première position de fonctionnement vers une seconde position de fonctionnement. Le moyen de maintien 4 comporte de préférence un ressort hélicoïdal.

Le déplacement de la surface de contact 31 sous l'action d'une force d'actionnement FA se fait à l'encontre d'une force de maintien FM essentiellement générée par le ressort de compression du moyen de maintien 4.

Ledit ressort de compression placé de préférence dans le corps 1 exerce une force de maintien tendant à repousser l'organe de commande 2 dans la première position de fonctionnement, dite de repos. Selon ce mode de réalisation de l'invention, le contact électrique est alors ouvert et le dispositif de détection se trouve dans un état de détection inactif. Le moyen de maintien 4 peut aussi exercer la force de maintien sur l'organe de commande mobile 2 par l'intermédiaire de la surface de contact 31 du contact électrique 3.

Selon un mode de réalisation préférentiel de l'invention tel que représenté sur la figure 5, l'appui P et la zone de contact C entre l'organe d'actionnement 21 et la surface de contact 31 sont placés dans une même plan XY. En outre, la zone de contact C, de préférence ponctuelle, est placée sur l'axe de déplacement Z.

Lorsqu'une force d'actionnement FA est appliquée sur l'organe de commande mobile 2 selon une direction sensiblement confondue avec l'axe de déplacement Z, ledit organe de commande se déplace en translation par rapport au corps 1. Le déplacement est réalisé essentiellement selon l'axe de déplacement Z. Ce déplacement de l'organe de commande mobile 1 s'effectue contre la force de maintien FM exercée par le ressort de compression 4. Après s'être déplacé, le bouton poussoir atteint sa deuxième position de fonctionnement et vient actionner le contact électrique 3 qui change d'état électrique. Selon ce mode de réalisation de l'invention, le contact électrique est alors fermé et le dispositif de détection se trouve dans un état de détection actif. Dès que la force d'actionnement n'est plus appliquée, le dispositif de détection quitte la seconde position de fonctionnement pour se repositionner dans la première position de fonctionnement. Le contact électrique 3 va basculer dans un état électrique fermé vers un état électrique ouvert.

En fonction du point d'application et de l'intensité de la force d'actionnement FA sur la surface de commande 22 de l'organe de commande mobile 2, ledit organe va se déplacer soit en translation, soit en pivotement soit en translation et en pivotement.

Lorsque la force d'actionnement FA est appliquée selon une direction distincte de l'axe de déplacement Z, autrement dit lorsque la force d'actionnement FA est appliquée de manière décentrée par rapport l'axe de déplacement Z, ledit organe de commande va pivoter par rapport au corps 1 autour d'un appui P. Le pivotement de l'organe de commande entraîne le déplacement de l'organe de commande mobile 2 qui va actionner le contact électrique 3.

Le pivotement de l'organe de commande mobile 2 combiné à un effet bras de levier permet d'assurer un actionnement efficace du contact électrique 3.

L'effet bras de levier est proportionnel au rapport entre d'une part la distance PAx séparant le point d'application de la force d'actionnement FA au point d'actionnement A et l'appui P et d'autre part la distance PCx séparant le point de contact C et l'appui P. Les deux distances PAx, PCx sont projetées et mesurées sur un plan XY perpendiculaire à l'axe de déplacement Z. Plus le rapport des distances PAx / PCx est important, plus l'effet bras de levier le sera et moins la force d'actionnement FA utile au déplacement de la surface de contact 31 devra être importante.

Grâce à l'effet bras de levier, la force de contact FC appliquée au niveau de la zone de contact C est supérieure à la force d'actionnement FA. La force de contact est alors suffisante pour s'opposer à la force de maintien FM et engendrer le déplacement de la surface de contact 31 sur toute la course d'actionnement. Compte tenu que la force d'actionnement FA est transposée au niveau de la zone de contact C, les effets d'arc-boutement sont minimisés.

Ainsi, contrairement à un dispositif de détection connu tel que représenté sur les figures 1 à 4, les frottements rencontrés par la surface de contact 31 se déplaçant ne dépendent pas du point d'application A de la force d'actionnement FA sur la surface de commande 22. Une détection efficace a lieu quel que soit le point d'application de la force d'actionnement FA sur la surface de commande 22 de l'organe de commande mobile 2.

Lorsque l'organe d'actionnement 2 pivote autour d'un appui P, la périphérie de la surface de contact 22 se déplace aussi en rotation par rapport au point de pivot. Le déplacement de la périphérie de l'organe d'actionnement 2 projeté selon une direction parallèle à l'axe de déplacement Z est appelé par la suite le débattement AZ. Pour une course d'actionnement CA fixée, le débattement AZ est supérieur à la course d'actionnement CA du fait de l'effet bras de levier.

Suivant le type d'utilisation du dispositif de détection, il est souhaitable d'obtenir un débattement plus ou moins important.

A titre d'exemple, on souhaitera réduire le débattement AZ lorsque le dispositif de détection est positionné dans un volume confiné impliquant des problèmes d'encombrement. Il peut être souhaitable de réduire le débattement de l'organe d'actionnement 2 lorsque la course des moyens d'actionnement produisant la force d'actionnement FA est limitée.

A l'inverse, on souhaitera par exemple augmenter le débattement AZ lorsque la course des moyens produisant la force d'actionnement FA est importante et que l'on ne souhaite pas bloquer leur déplacement.

On définit un premier facteur de débattement Fd1. Ce facteur de débattement Fd1 est égale au rapport entre deux distances (Fd1 = PCx / PZx). Une première distance PCx est mesurée entre la zone de contact C et l'appui P. Une seconde distance PZx est mesurée entre l'appui P et l'axe de déplacement Z. Ces deux distances PCx et PZx correspondent aux distances réelles projetées sur le plan XY perpendiculaire à l'axe de déplacement Z.

Pour un dispositif de détection selon une mode de réalisation représenté sur la figure 5, le premier facteur de débattement horizontal Fd1 est égale à 1. En effet la première distance PCx est égale à la seconde distance PZx. Le débattement AZ est alors directement proportionnel à l'effet bras de levier proportionnel au rapport des distances PAx / PCx.

Comme représenté sur la figure 6, la première distance PCx étant supérieure à la seconde distance PZx, le premier facteur de débattement Fd1 augmente et devient supérieur à 1. Selon ce mode de réalisation présenté, le débattement AZ aura tendance à diminuer.

Inversement, si le facteur de débattement Fd1 diminue et devient inférieur à 1, le débattement AZ aura tendance à augmenter.

On définit un second facteur de débattement Fd2. Ce second facteur de débattement Fd2 est dépendant de la position de l'appui P par rapport à la zone de contact C selon la direction de l'axe de déplacement Z.

Pour un dispositif de détection selon un mode de réalisation représenté sur la figure 5, le second facteur de débattement Fd2 est égale à 0. En effet, la zone de contact C et l'appui P étant dans le même plan XY perpendiculaire à l'axe de déplacement Z. Une troisième distance PCz entre les deux points C, P, projetée selon un plan XZ parallèle à l'axe de déplacement Z, est nulle.

Comme représenté sur la figure 7, l'appui P se trouve éloigné de la zone de contact C selon le plan de projection XZ. Le second facteur de débattement Fd2 augmentant, le débattement a tendance à diminuer.

Au cours du pivotement de l'organe de commande mobile 2, la zone de contact C entre le moyen de commande 21 et la surface de contact 31 du contact électrique va se déplacer.

Ce déplacement peut se faire le long d'une surface sensiblement plane et perpendiculaire à l'axe de déplacement Z. Comme représentée sur la figure 5, la surface de contact 31 reprend la forme d'un disque positionné perpendiculairement à l'axe de déplacement Z.

Afin d'augmenter ou réduire le débattement AZ sans modifier l'effet bras de levier, la surface de contact 31 peut être inclinée par rapport à l'axe de déplacement Z. Cette inclinaison plus ou moins importante peut être positive ou négative en fonction des effets recherchés.

Lorsque le positionnement de la collerette 23 sur l'épaulement 11 autorise un pivotement de l'organe de commande mobile 2 par rapport au corps 1 selon de nombreuses directions réparties uniformément autour d'un cercle, la surface de contact sera de préférence convexe ou concave.

Ainsi, l'inclinaison de la surface de contact par rapport à l'axe de déplacement Z, les premier et second facteurs de débattement Fd1, Fd2 sont autant de moyens de paramétrage permettant de régler le débattement AZ.

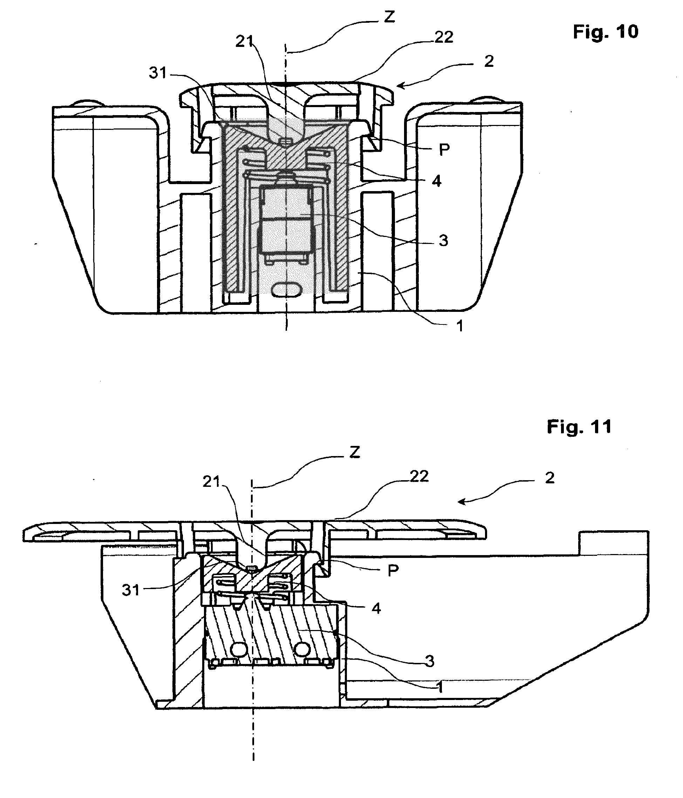

Selon un mode de réalisation particulier de l'invention tel que représenté sur les figures 10 et 11, la surface d'appui 31 est de forme concave. De préférence, la surface d'appui 31 a une forme conique. Le moyen de commande 21 comporte une tige ayant une extrémité pointue. Lorsque le dispositif de détection est dans un état de détection inactif, l'extrémité du moyen de commande 21 se trouve à l'intérieur du cône, plus précisément au sommet du cône au niveau du point de contact C. Le sommet du cône est de préférence sur l'axe de déplacement Z. Lorsque la force d'actionnement FA décentrée est appliquée sur l'organe de commande mobile 2, ce dernier pivote et l'extrémité du moyen de commande 21 tend à se déplacer le long de la pente du cône. Selon ce mode de réalisation représenté sur les figures 10 et 11, compte tenu des facteurs de débattement Fd1, Fd2, pour une force d'actionnement FA donnée, le débattement AZ de l'organe de commande 2 tend à être maximiser.

Le même effet est obtenu avec un second mode de réalisation particulier de l'invention tel que représenté sur les figues 8 et 9. La surface d'appui 31 du contact électrique est de forme convexe. De préférence, la surface d'appui 31 a une forme conique ou tronconique. Le moyen de commande 21 comporte une tige creuse. Lorsque le dispositif de détection est dans un état de détection inactif, l'extrémité du moyen de commande 21 se trouve de préférence au pied du cône.

Selon une variante de réalisation non représentée, ladite extrémité du moyen de commande 21 n'est pas en contact avec la surface de contact 31 du contact électrique 3 lorsque le dispositif de détection est dans d'un état de détection inactif. Ladite extrémité du moyen de commande 21 rentre en contact avec la surface de contact 31 du contact électrique 3 seulement après que l'organe de commande 2 se soit déplacé.

Lorsque le dispositif de détection est destiné à être utilisé dans un siège, la force d'actionnement FA est généralement due à la déflexion du siège provoquée par la présence d'une personne ou d'un objet sur le siège. Le dispositif de détection peut être notamment placé sous la surface d'assise du siège. La déformation de la surface d'assise du siège en présence d'une personne entraîne notamment le déplacement de l'organe de commande mobile 2. Le contact 3 étant généralement relié à des moyens de traitement et d'analyse non représentés, le signal de fermeture résultant du changement d'état électrique du contact peut être analysé par lesdits moyens de traitement. La force de maintien FM dépendante de la raideur du ressort 4 peut être choisie en fonction du seuil de détection voulu.

Dans une application liée à l'automobile, on ne connaît pas précisément le point d'application de la force d'actionnement FA et on ne maîtrise pas l'intensité de la force d'actionnement FA. En effet, pour un siège donné, ces deux paramètres dépendant respectivement essentiellement du poids du passager et de sa position sur le siège. Il est souhaitable, pour un passager donné assis à un endroit du siège, que la surface de contact 31 se déplace sur toute la course d'actionnement CA pour que la détection puisse avoir lieu. Autrement dit, la force d'actionnement FA doit être suffisante pour s'opposer à la force de maintien FM quel que soit son point d'application A. Ceci doit se vérifier quel que soit le poids du passager et quelle que soit sa position sur le siège. Il est souhaitable que le dispositif de détection soit opérationnel dans un grand nombre de situations.

Selon un mode particulier de réalisation, le dispositif de détection comporte des moyens d'accrochage 12 destinés à maintenir ledit dispositif sur un support externe non représenté. Selon ce mode de développement de l'invention, les moyens d'accrochage 12 sont plus particulièrement destinés à maintenir le dispositif de détection sur un siège de véhicule automobile. Le support externe se compose alors principalement d'un treillis constituant un des éléments d'une structure porteuse d'un siège de véhicule automobile. Les moyens d'accrochage 12 comportent alors au moins un crochet venant se fixer sur une des mailles du treillis. Au moment de la fixation du dispositif de détection sur le support externe, notamment sur les mailles du treillis du siège de véhicule, les crochets des moyens d'accrochage 12 viennent se coupler avec les mailles du treillis.

Le dispositif de détection est particulièrement destiné à être combiné à un siège, notamment un siège de véhicule automobile. Le siège comprend au moins une surface d'assise déformable sur laquelle est destinée à venir s'asseoir une personne. La surface d'assise comprenant une mousse déformable, est reliée à un bâti rigide destiné à être fixé à un véhicule. Le dispositif de détection tel que défini ci-dessus est positionné sous la surface d'assise de manière à ce que la mousse déformable puisse appliquer une force d'actionnement sur l'organe de commande mobile 2 au moment de la déformation de la surface d'assise. Le dispositif de détection tel que défini ci-dessus est de préférence accroché par ces moyens d'accrochage 12. La mousse déformable est de préférence en contact avec l'organe de commande mobile 2.

Le dispositif de détection est relié à des moyens d'analyse du véhicule. Les informations fournies par ledit dispositif de détection peuvent être combinées à l'analyse d'autres paramètres fonctionnels d'un véhicule.

Selon un mode particulier de réalisation du siège, la mousse déformable est en contact directe avec la surface de commande 21 de l'organe de commande mobile 2.

Selon une variante de réalisation du siège, ledit siège comporte un dossier dans lequel est positionné un dispositif de détection tel que décrit ci-dessus. Le dispositif de détection tend à détecter la déformation d'une première partie du dossier par rapport à une seconde partie du dossier.

## Revendications

1. Dispositif de détection comportant :
- un corps (1) comportant un contact électrique (3) à au moins un premier et un second états électriques de fonctionnement,
- un organe de commande mobile (2) déplaçable entre au moins une première position de fonctionnement dans laquelle le contact électrique est dans son premier état électrique, et une seconde position de fonctionnement dans laquelle le contact électrique est dans son second état électrique, le déplacement de l'organe de commande (2) entre la première et la seconde position de fonctionnement actionnant le contact électrique (3) de son premier état électrique à son second état électrique et l'organe de commande (2) étant relié au corps (1) par une liaison glissière autorisant le déplacement en translation de l'organe de commande mobile (2) entre ses première et seconde positions de fonctionnement par rapport au corps (1) selon un axe de déplacement (Z), et
le changement de position de l'organe de commande mobile (2) étant apte à actionner le dispositif de contact électrique (3) en appuyant directement sur une surface de contact dudit contact électrique, et
l'organe de commande mobile comportant un moyen de commande (21) dont une extrémité est destinée à collaborer avec la surface de contact (31) au niveau d'une zone de contact (C) pour actionner le changement d'état électrique de fonctionnement dudit contact électrique (3) en appuyant directement sur ladite surface de contact (31), **caractérisé en ce que** l'organe de commande (2) est aussi relié au corps (1) par au moins une liaison pivot autorisant le pivotement de l'organe de commande (2) entre ses première et seconde positions de fonctionnement par rapport au corps (1) autour d'au moins un appui (P), ledit appui (P) de ladite au moins une liaison pivot étant décentré par rapport à l'axe de déplacement (Z) et positionné entre l'organe de commande mobile (2) et le corps (1).

2. Dispositif de détection selon la revendication 1, **caractérisé en ce que** une première distance (PCx) entre la zone de contact (C) et l'appui (P) est supérieure à une seconde distance (PZx) entre l'appui (P) et l'axe de déplacement (Z), lesdites distances (PCx) et (PZx) correspondent aux distances réelles projetées sur un plan XY perpendiculaire à l'axe de déplacement (Z).

3. Dispositif de détection selon la revendication 1, **caractérisé en ce que** une première distance (PCx) entre la zone de contact (C) et l'appui (P) est inférieure à une seconde distance (PZx) entre l'appui (P) et l'axe de déplacement (Z), lesdites distances (PCx) et (PZx) correspondant aux distances réelles projetées sur un plan XY perpendiculaire à l'axe de déplacement (Z).

4. Dispositif de détection selon la revendication 1, **caractérisé en ce que** une troisième distance (PCz) entre la zone de contact C et l'appui P suivant un plan XZ parallèle à l'axe de déplacement Z, est nulle.

5. Dispositif de détection selon la revendication 1, **caractérisé en ce que** une troisième distance (PCz) entre la zone de contact C et l'appui P suivant un plan XZ parallèle à l'axe de déplacement Z, est supérieure à zéro.

6. Dispositif de détection selon l'une quelconque des revendications 1 à 5, **caractérisé en ce que** la surface de contact (31) est perpendiculaire à l'axe de déplacement (Z) et telle que, au cours du pivotement de l'organe de commande (2), la zone de contact (C) se déplace le long de la surface de contact (31).

7. Dispositif de détection selon l'une quelconque des revendications 1 à 5, **caractérisé en ce que** la surface de contact (31) est inclinée par rapport à l'axe de déplacement (Z) et telle que, au cours du pivotement de l'organe de commande (2), la zone de contact (C) se déplace le long de la surface de contact (31).

8. Dispositif de détection selon la revendication 7, **caractérisé en ce que** la surface de contact (31) est de forme concave.

9. Dispositif de détection selon la revendication 7, **caractérisé en ce que** la surface de contact (31) est de forme convexe.

10. Dispositif de détection selon l'une quelconque des revendications précédentes, caractérisé en ce l'organe de commande mobile (2) est relié au corps (1) par au moins quatre appuis (P) autorisant respectivement chacun le pivotement dudit organe de commande mobile (2) par rapport au corps (1) selon une liaison pivot.

11. Dispositif de détection selon la revendication 10, caractérisé en ce l'organe de commande mobile (2) comporte une collerette (23) en appui sur un épaulement (11) du corps (1) et permettant le pivotement dudit organe de commande mobile par rapport au corps (1).

12. Dispositif de détection selon l'une quelconque des revendications précédentes, **caractérisé en ce que** l'organe de commande mobile (2) est maintenu dans une première position de fonctionnement par rapport au corps (1) par un moyen de maintien (4), ledit moyen de maintien (4) exerçant une force de maintien (FM) s'opposant au déplacement de l'organe de commande (2) par rapport au corps (1) de la première position de fonctionnement vers une seconde position de fonctionnement et **en ce que** le moyen de maintien (4) exerce la force de maintien (FM) sur l'organe de commande mobile (2) par l'intermédiaire de la surface de contact (31) du contact électrique (3).

13. Dispositif selon l'une quelconque des revendications précédentes, dans lequel le déplacement en translation et, en alternance, en pivotement de l'organe de commande mobile (2) est apte à actionner le dispositif de contact électrique (3) en appuyant directement sur la surface de contact dudit contact électrique.

14. Siège comprenant au moins une surface d'assise déformable sur laquelle est destiné à venir s'asseoir un passager, un bâti rigide destiné à être fixé à un véhicule **caractérisé en ce qu'**au moins un dispositif de détection selon l'une quelconque des revendications 1 à 16, est placé dans le siège de manière à détecter les déformations dudit siège.

15. Siège selon la revendication 14, **caractérisé en ce que** ledit au moins un dispositif de détection est accroché sous la surface d'assise du siège par des moyens d'accrochage (12), la surface d'assise comprenant une surface déformable commandant le déplacement de l'organe de commande mobile (2) par rapport au corps (1) vers la seconde position de fonctionnement.

## Patentansprüche

1. Erfassungsvorrichtung, die aufweist:
- einen Körper (1), der einen elektrischen Kontakt (3) mit mindestens einem ersten und einem zweiten elektrischen Betriebszustand aufweist,
- ein bewegliches Steuerorgan (2), das zwischen mindestens einer ersten Betriebsstellung, in der der elektrische Kontakt in seinem ersten elektrischen Zustand ist, und einer zweiten Betriebsstellung verschiebbar ist, in der der elektrische Kontakt in seinem zweiten elektrischen Zustand ist, wobei die Verschiebung des Steuerorgans (2) zwischen der ersten und der zweiten Betriebsstellung den elektrischen Kontakt (3) von seinem ersten elektrischen Zustand in seinen zweiten elektrischen Zustand aktiviert, und das Steuerorgan (2) mit dem Körper (1) über eine Gleitschienenverbindung verbunden ist, die die Translationsverschiebung des beweglichen Steuerorgans (2) zwischen seiner ersten und zweiten Betriebsstellung bezüglich des Körpers (1) gemäß einer Verschiebeachse (Z) erlaubt, und
die Stellungsänderung des beweglichen Steuerorgans (2) die elektrische Kontaktvorrichtung (3) aktivieren kann, indem direkt auf eine Kontaktfläche des elektrischen Kontakts gedrückt wird, und
das bewegliche Steuerorgan eine Steuereinrichtung (21) aufweist, von der ein Ende dazu bestimmt ist, mit der Kontaktfläche (31) im Bereich einer Kontaktzone (C) zusammenzuwirken, um die Änderung des elektrischen Betriebszustands des elektrischen Kontakts (3) zu aktivieren, indem direkt auf die Kontaktfläche (31) gedrückt wird,
**dadurch gekennzeichnet, dass** das Steuerorgan (2) auch mit dem Körper (1) über mindestens eine Schwenkverbindung verbunden ist, die das Schwenken des Steuerorgans (2) zwischen seiner ersten und zweiten Betriebsstellung bezüglich des Körpers (1) um mindestens eine Auflage (P) erlaubt, wobei die Auflage (P) der mindestens einen Schwenkverbindung bezüglich der Verschiebeachse (Z) exzentrisch und zwischen dem beweglichen Steuerorgan (2) und dem Körper (1) positioniert ist.

2. Erfassungsvorrichtung nach Anspruch 1, **dadurch gekennzeichnet, dass** ein erster Abstand (PCx) zwischen der Kontaktzone (C) und der Auflage (P) größer als ein zweiter Abstand (PZx) zwischen der Auflage (P) und der Verschiebeachse (Z) ist, wobei die Abstände (PCx) und (PZx) den wahren Abständen projiziert auf eine Ebene XY lotrecht zur Verschiebeachse (Z) entsprechen.

3. Erfassungsvorrichtung nach Anspruch 1, **dadurch gekennzeichnet, dass** ein erster Abstand (PCx) zwischen der Kontaktzone (C) und der Auflage (P) geringer als ein zweiter Abstand (PZx) zwischen der Auflage (P) und der Verschiebeachse (Z) ist, wobei die Abstände (PCx) und (PZx) den wahren Abständen projiziert auf eine Ebene XY lotrecht zur Verschiebeachse (Z) entsprechen.

4. Erfassungsvorrichtung nach Anspruch 1, **dadurch gekennzeichnet, dass** ein dritter Abstand (PCz) zwischen der Kontaktzone C und der Auflage P gemäß einer Ebene XZ parallel zur Verschiebeachse Z Null ist.

5. Erfassungsvorrichtung nach Anspruch 1, **dadurch gekennzeichnet, dass** ein dritter Abstand (PCz) zwischen der Kontaktzone C und der Auflage P gemäß einer Ebene XZ parallel zur Verschiebeachse Z größer als Null ist.

6. Erfassungsvorrichtung nach einem der Ansprüche 1 bis 5, **dadurch gekennzeichnet, dass** die Kontaktfläche (31) lotrecht zur Verschiebeachse (Z) und derart ist, dass die Kontaktzone (C) sich während des Schwenkens des Steuerorgans (2) entlang der Kontaktfläche (31) verschiebt.

7. Erfassungsvorrichtung nach einem der Ansprüche 1 bis 5, **dadurch gekennzeichnet, dass** die Kontaktfläche (31) bezüglich der Verschiebeachse (Z) geneigt und derart ist, dass die Kontaktzone (C) sich während des Schwenkens des Steuerorgans (2) entlang der Kontaktfläche (31) verschiebt.

8. Erfassungsvorrichtung nach Anspruch 7, **dadurch gekennzeichnet, dass** die Kontaktfläche (31) eine konkave Form hat.

9. Erfassungsvorrichtung nach Anspruch 7, **dadurch gekennzeichnet, dass** die Kontaktfläche (31) eine konvexe Form hat.

10. Erfassungsvorrichtung nach einem der vorhergehenden Ansprüche, **dadurch gekennzeichnet, dass** das bewegliche Steuerorgan (2) mit dem Körper (1) über mindestens vier Auflagen (P) verbunden ist, die je das Schwenken des beweglichen Steuerorgans (2) bezüglich des Körpers (1) gemäß einer Schwenkverbindung erlauben.

11. Erfassungsvorrichtung nach Anspruch 10, **dadurch gekennzeichnet, dass** das bewegliche Steuerorgan (2) einen Kragen (23) aufweist, der auf einer Schulter (11) des Körpers (1) aufliegt und das Schwenken des beweglichen Steuerorgans bezüglich des Körpers (1) erlaubt.

12. Erfassungsvorrichtung nach einem der vorhergehenden Ansprüche, **dadurch gekennzeichnet, dass** das bewegliche Steuerorgan (2) durch eine Halteeinrichtung (4) in einer ersten Betriebsstellung bezüglich des Körpers (1) gehalten wird, wobei die Halteeinrichtung (4) eine Haltekraft (FM) ausübt, die der Verschiebung des Steuerorgans (2) bezüglich des Körpers (1) von der ersten Betriebsstellung in eine zweite Betriebsstellung entgegenwirkt, und dass die Halteeinrichtung (4) die Haltekraft (FM) auf das bewegliche Steuerorgan (2) über die Kontaktfläche (31) des elektrischen Kontakts (3) ausübt.

13. Vorrichtung nach einem der vorhergehenden Ansprüche, wobei die Translationsverschiebung und damit abwechselnd die Schwenkverschiebung des beweglichen Steuerorgans (2) die elektrische Kontaktvorrichtung (3) aktivieren kann, indem direkt auf die Kontaktfläche des elektrischen Kontakts gedrückt wird.

14. Sitz, der mindestens eine verformbare Sitzfläche, auf die sich ein Fahrgast setzen soll, und einen steifen Rahmen enthält, der dazu bestimmt ist, an einem Fahrzeug befestigt zu werden, **dadurch gekennzeichnet, dass** mindestens eine Erfassungsvorrichtung nach einem der Ansprüche 1 bis 13 im Sitz angeordnet ist, um die Verformungen des Sitzes zu erfassen.

15. Sitz nach Anspruch 14, **dadurch gekennzeichnet, dass** die mindestens eine Erfassungsvorrichtung unter der Sitzfläche des Sitzes durch Befestigungseinrichtungen (12) befestigt wird, wobei die Sitzfläche eine verformbare Fläche enthält, die die Verschiebung des beweglichen Steuerorgans (2) bezüglich des Körpers (1) in die zweite Betriebsstellung steuert.

## Claims

1. Detection device comprising:
- a body (1) comprising an electric contact (3) having at least a first and a second electric operating state,
- a mobile control member (2) able to move between at least a first operating position in which the electric contact is in its first electric state, and a second operating position in which the electric contact is in its second electric state, movement of the control member (2) between the first and second operating positions actuating the electric contact (3) from its first electric state to its second electric state and the control member (2) being connected to the body (1) by a sliding connection that allows for the mobile control member (2) a translational movement between its first and second operating positions with respect to the body (1) along an axis of travel (Z), and
the change in position of the mobile control member (2) being able to actuate the electric contact device (3) by pressing directly against a contact surface of the said electric contact, and
the mobile control member comprising a control means (21) at which one end is intended to collaborate with the contact surface (31) in a contact region (C) to bring about the change in electric operating state of the said electric contact (3) by pressing directly on the said contact surface (31),
**characterized in that** the control member (2) is also connected to the body (1) by at least a pivot connection that allows the control member (2) to pivot between its first and second operating positions with respect to the body (1) about at least one support (P), the said support (P) of the said at least one pivot connection being off-centred with respect to the axis of travel (Z) and positioned between the mobile control member (2) and the body (1).

2. Detection device according to Claim 1, **characterized in that** a first distance (PCx) between the contact region (C) and the support (P) is greater than a second distance (PZx) between the support (P) and the axis of travel (Z), the said distances (PCx) and (PZx) corresponding to the actual distances projected onto a plane XY perpendicular to the axis of travel (Z).

3. Detection device according to Claim 1, **characterized in that** a first distance (PCx) between the contact region (C) and the support (P) is less than a second distance (PZx) between the support (P) and the axis of travel (Z), the said distances (PCx) and (PZx) corresponding to the actual distances projected onto a plane XY perpendicular to the axis of travel (Z).

4. Detection device according to Claim 1, **characterized in that** a third distance (PCz) between the contact region C and the support P in a plane XZ parallel to the axis of travel Z is zero.

5. Detection device according to Claim 1, **characterized in that** a third distance (PCz) between the contact region C and the support P in a plane XZ parallel to the axis of travel Z is greater than zero.

6. Detection device according to any one of Claims 1 to 5, **characterized in that** the contact surface (31) is perpendicular to the axis of travel (Z) and such that, as the control member (2) pivots, the contact region (C) moves along the contact surface (31).

7. Detection device according to any one of Claims 1 to 5, **characterized in that** the contact surface (31) is inclined with respect to the axis of travel (Z) and such that, as the control member (2) pivots, the contact region (C) moves along the contact surface (31).

8. Detection device according to Claim 7, **characterized in that** the contact surface (31) is concave in shape.

9. Detection device according to Claim 7, **characterized in that** the contact surface (31) is convex in shape.

10. Detection device according to any one of the preceding claims, **characterized in that** the mobile control member (2) is connected to the body (1) by at least four supports (P) each respectively allowing the said mobile control member (2) to pivot with respect to the body (1) in a pivot connection.

11. Detection device according to Claim 10, **characterized in that** the mobile control member (2) comprises a collar (23) bearing against a shoulder (11) of the body (1) and allowing the said mobile control member to pivot with respect to the body (1).

12. Detection device according to any one of the preceding claims, **characterized in that** the mobile control member (2) is held in a first operating position with respect to the body (1) by a retaining means (4), the said retaining means (4) applying a retaining force (FM) that opposes the movement of the control member (2) with respect to the body (1) from the first operating position toward a second operating position, and **in that** the retaining means (4) applies the retaining force (FM) to the mobile control member (2) via the contact surface (31) of the electric contact (3).

13. Device according to any one of the preceding claims, in which the alternating translational and pivoting movements of the mobile control member (2) are able to actuate the electric contact device (3) by pressing directly on the contact surface of the said electric contact.

14. Seat comprising at least one deformable seating surface on which a passenger is intended to sit, a rigid supporting structure intended to be fixed to a vehicle, **characterized in that** at least one detection device according to any one of Claims 1 to 13 is placed in the seat so as to detect deformations of the said seat.

15. Seat according to Claim 14, **characterized in that** the said at least one detection device is attached under the seating surface of the seat by attachment means (12), the seating surface comprising a deformable surface controlling the movement of the mobile control member (2) with respect to the body (1) toward the second operating position.
